# FASCICULE DE BREVET EUROPEEN

(11) **EP 3 195 391 B1**
(45) Date de publication et mention de la délivrance du brevet: **10.10.2018**
(21) Numéro de dépôt: 15771996.4
(22) Date de dépôt: 15.09.2015
(51) Int. Cl.: H01M 8/0258, H01M 8/0273, H01M 8/04089, H01M 8/02

(54) **PILE A COMBUSTIBLE DESTINEE A LA DETECTION D'UN POLLUANT**
BRENNSTOFFZELLE ZUR ERKENNUNG EINES SCHADSTOFFES
FUEL CELL FOR DETECTING A POLLUTANT

(30) Priorité: 19.09.2014 FR 1458846
(43) Date de publication de la demande: 26.07.2017
(73) Titulaire: Commissariat à l'Energie Atomique et aux Energies Alternatives, 75015 Paris (FR)
(72) Inventeur: VINCENT, Rémi, F-38000 Grenoble (FR); ROSINI, Sébastien, F-38100 Grenoble (FR); TREMBLAY, Denis, F-38340 Pommiers-la-Placette (FR)
(74) Mandataire: GIE Innovation Competence Group
(86) Numéro de dépôt international: PCT/FR2015/052471
(87) Numéro de publication internationale: WO 2016/042257

(56) Documents cités:
- EP-A2- 1 017 121
- US-A1- 2008 299 422
- US-B1- 6 214 487

## Description

L'invention concerne les piles à combustible incluant un empilement de cellules électrochimiques, et plus particulièrement un empilement incluant des plaques bipolaires et des membranes échangeuses de protons.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est ionisé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réactions et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

Certaines conceptions de plaques bipolaires utilisent des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part. Les collecteurs d'entrée et de sortie sont usuellement obtenus par :
- des orifices respectifs traversant chaque plaque bipolaire à sa périphérie ;
- des orifices respectifs traversant chaque membrane à sa périphérie ;
- par des joints, chacun interposé entre une plaque bipolaire et une membrane.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices de collecteurs respectifs, et d'autre part dans des orifices d'injection. Une zone d'homogénéisation comprend des canaux qui mettent en communication des orifices d'injection avec des canaux d'écoulement.

La zone d'homogénéisation comprend en général : une zone de transfert de fluide de refroidissement, une zone d'homogénéisation de circuit de comburant et une zone d'homogénéisation de circuit de carburant superposées et débouchant respectivement vers un collecteur de liquide de refroidissement, un collecteur de circuit de comburant et un collecteur de circuit de carburant.

Les fluides s'écoulant dans les piles à combustible peuvent être soumis à des pollutions pouvant altérer le fonctionnement. Par exemple, les cellules de piles à combustible sont soumises à un risque de corrosion d'éléments carbonés à l'origine de la formation de monoxyde de carbone. Le monoxyde de carbone se mélange au dihydrogène du carburant et vient polluer l'anode par adsorption. Du diazote peut se mélanger au dihydrogène et ainsi le diluer, ce qui altère les performances de la pile à combustible. L'air utilisé comme comburant peut également inclure une quantité non négligeable de polluants pouvant polluer la cathode par adsorption.

Il est connu de réaliser des cycles de fonctionnement destinés à éliminer certains polluants. Il est ainsi connu de réaliser des purges de dihydrogène en vue d'éviter une trop grande dilution du dihydrogène par le diazote. Cependant, il n'existe pas de moyens satisfaisants permettant d'identifier ou de quantifier précisément une pollution en vue de déclencher de tels cycles de fonctionnement, en particulier pour un empilement de cellules d'une pile à combustible destinée à être distribuée dans le commerce.

Le document US6214487 décrit une pile à combustible intégrant un condensateur de mesure ménagé dans la zone réactive d'un assemblage membrane/électrodes. Une plaque du condensateur est notamment ménagée en délimitant une séparation isolante par rapport à une électrode environnante. La formation des plaques de condensateur dans la zone active détériore les performances de la pile à combustible et rend sa connectique délicate à réaliser. Ce document ne permet pas non plus d'homogénéiser les flux de réactifs vers la zone active.

Le document EP1017121 décrit une pile à combustible présentant une cellule électrochimique munie d'un assemblage membrane/électrodes. Cette cellule électrochimique est dédiée à la détection d'une pollution et est mise en communication avec l'écoulement de carburant. Dans cette cellule électrochimique, l'anode de l'assemblage membrane/électrodes forme une zone réactive utilisée comme capteur de pollution. Cette pile à combustible fait perdre une cellule électrochimique pour la production d'électricité. De plus, la mesure d'une pollution dans la cellule dédiée n'est pas représentative des conditions dans le reste des cellules électrochimiques de l'empilement.

Le document US2008/0299422 décrit une pile à combustible présentant une cellule électrochimique munie d'un assemblage membrane/électrodes. Cette cellule électrochimique est dédiée à la détection d'une pollution et est mise en communication avec l'écoulement d'hydrogène. On force ici l'hydrogène à traverser la membrane. En fonction de la quantité d'hydrogène traversant la membrane, on peut déduire des conditions de pollution. Cette pile à combustible implique l'alimentation électrique de la cellule électrochimique dédiée par les autres cellules électrochimiques. De plus, la mesure d'une pollution dans la cellule dédiée n'est pas représentative des conditions dans le reste des cellules électrochimiques de l'empilement.

L'invention vise à résoudre un ou plusieurs de ces inconvénients. L'invention porte ainsi sur une pile à combustible telle que définie dans les revendications annexées.

L'invention porte en outre sur un procédé de fabrication d'une pile à combustible, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- la figure 3 est une vue de dessus d'un premier renfort pour une cellule de pile à combustible selon un mode de réalisation de l'invention ;
- la figure 4 est une vue de dessus d'une membrane et d'une anode destinées à être assemblées au renfort de la figure 3 ;
- la figure 5 est une vue de dessus d'un deuxième renfort destiné à être assemblé au premier renfort et à l'anode et à la membrane de la figure 4 pour former un assemblage membrane/électrodes ;
- la figure 6 est une vue de dessus d'une couche de diffusion gazeuse destinée à être plaquée contre l'anode de l'assemblage membrane/électrodes de la figure 4 ;
- la figure 7 est une vue de dessus d'une cellule électrochimique en cours d'assemblage ;
- la figure 8 est une vue de dessus de la cellule de la figure 7 après mise en place de la couche de diffusion gazeuse de la figure 6 ;
- la figure 9 est une vue de dessus d'une variante de membrane associée à une anode.

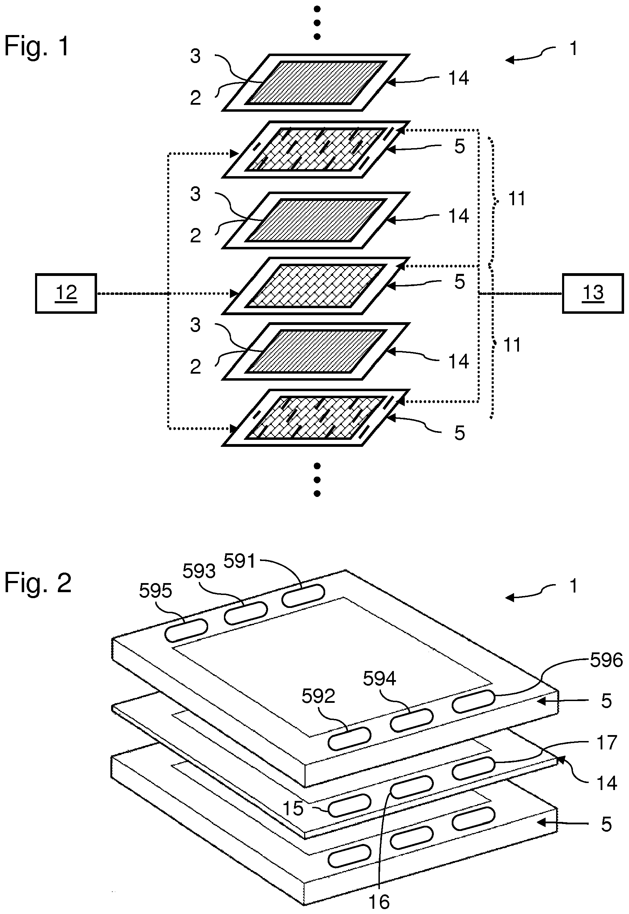

La figure 1 est une vue en perspective éclatée schématique d'un empilement de cellules 11 d'une pile à combustible 1. La pile à combustible 1 comprend plusieurs cellules 11 superposées. Les cellules 11 sont du type à membrane échangeuse de protons ou membrane à électrolyte polymère.

La pile à combustible 1 comprend une source de carburant 12. La source de carburant 12 alimente ici en dihydrogène une entrée de chaque cellule 11. La pile à combustible 1 comprend également une source de comburant 13. La source de comburant 13 alimente ici en air une entrée de chaque cellule 11, l'oxygène de l'air étant utilisé comme oxydant. Chaque cellule 11 comprend également des canaux d'échappement. Une ou plusieurs cellules 11 présentent également un circuit de refroidissement.

Chaque cellule 11 comprend un assemblage membrane/électrodes 14 ou AME 14. Un assemblage membrane/électrodes 14 comprend un électrolyte 2, une cathode (non illustrée) et une anode 3 placées de part et d'autre de l'électrolyte et fixées sur cet électrolyte 2. La couche d'électrolyte 2 forme une membrane semi-perméable permettant une conduction protonique tout en étant imperméable aux gaz présents dans la cellule. La couche d'électrolyte empêche également un passage des électrons entre l'anode 3 et la cathode.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs.

De façon connue en soi, durant le fonctionnement de la pile à combustible 1, de l'air s'écoule entre une AME et une plaque bipolaire 5, et du dihydrogène s'écoule entre cette AME et une autre plaque bipolaire 5. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 1. L'empilement des plaques bipolaires 5 et des assemblages membrane/électrodes 14 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 14. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 596 sert par exemple pour former un collecteur d'évacuation de résidus de combustion, l'orifice 595 sert par exemple pour former un collecteur d'alimentation en liquide de refroidissement, l'orifice 592 sert par exemple pour former un collecteur d'évacuation de liquide de refroidissement, l'orifice 594 sert par exemple pour former un collecteur d'alimentation en comburant, et l'orifice 593 sert par exemple pour former un collecteur d'évacuation d'eau.

Les orifices des plaques bipolaires 5 et des assemblages membrane/électrodes 14 sont disposés en vis-à-vis afin de former les différents collecteurs d'écoulement. Des orifices 15, 16 et 17 sont par exemple ménagés dans des renforts des assemblages membrane/électrodes 14 et sont disposés en vis-à-vis respectivement des orifices 592, 594 et 596.

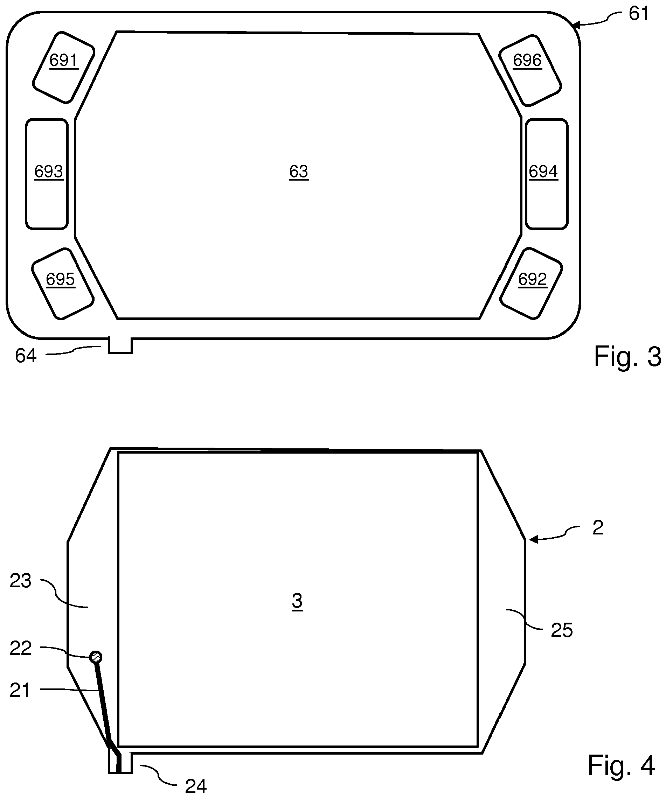

La figure 3 est une vue de dessus d'un premier type de renfort 61 pour une cellule de pile à combustible selon un premier mode de réalisation de l'invention. Le renfort 61 se présente ici sous la forme d'une couche ajourée. Le renfort 61 est par exemple réalisé en matériau polymère connu en soi. Le renfort 61 comporte de façon connue en soi une ouverture médiane 63 destinée à découvrir la majeure partie d'une électrode, la cathode en l'occurrence. Le renfort 61 entoure par ailleurs cette électrode. Le renfort 61 comporte par ailleurs des orifices 691, 693 et 695 ménagés de côté par rapport à l'ouverture médiane 63. Les orifices 691, 693 et 695 sont destinés à être positionnés en regard des orifices 591, 593 et 595 des plaques bipolaires 5. Le renfort 61 comporte par ailleurs des orifices 692, 694 et 696 ménagés à l'opposée des orifices 691, 693 695, par rapport à l'ouverture médiane 63. Les orifices 692, 694 et 696 sont destinés à être positionnés en regard des orifices 592, 594 et 596 des plaques bipolaires 5. Le renfort 61 comporte une saillie 64 au niveau d'un de ses bords. La saillie 64 est destinée à former au moins une surface non recouverte par un autre renfort 62 détaillé ultérieurement. La saillie 64 est ici positionnée latéralement par rapport aux ouvertures 691 à 696.

La figure 4 est une vue de dessus d'une membrane 2 et d'une anode 3 destinées à être assemblées au renfort 61. L'anode 3 est par exemple solidarisée à la membrane 2. Bien que non illustrée, une cathode est positionnée contre la membrane 2 du côté opposé à l'anode 3, et typiquement solidarisée à la membrane 2.

La membrane 2 comprend une zone active et des zones de liaison 23 et 25. La zone active correspond à la partie de la membrane 2 qui est recouverte par l'anode 3 et à l'aplomb de la cathode. Les zones de liaison 23 et 25 sont disposées de part et d'autre de l'anode 3 et ne sont pas recouvertes par cette anode 3. Les zones de liaison 23 et 25 s'étendent entre des collecteurs d'écoulement respectifs et l'anode 3. La zone de liaison 23 est ici destinée à être placée en contact avec du carburant provenant du collecteur d'alimentation en carburant, typiquement du dihydrogène.

La membrane 2 comporte en outre une saillie 24 au niveau d'un de ses bords. La saillie 24 est ici positionnée dans le prolongement latéral de la zone de liaison 23.

Une piste conductrice 21 forme un circuit imprimé sur la membrane 2, sur la face portant l'anode 3 dans le cas présent. La piste conductrice 21 s'étend ici en continu depuis la zone de liaison 23 jusque sur la saillie 24. Une électrode de mesure 22 incluant un catalyseur est ici en contact avec la membrane 2 dans la zone de liaison 23. L'électrode 22 est ici fixée à la membrane 2 dans la zone de liaison 23. L'électrode 22 étant disposée dans la zone de liaison 23, elle est isolée électriquement de l'anode 3 par la membrane 2. L'électrode 22 n'est ainsi pas influencée par le potentiel au niveau de l'anode 3. L'électrode 22 est en contact électrique avec la piste conductrice 21.

La piste conductrice 21 est typiquement formée par dépôt d'une encre sur la membrane 2, cette encre incluant une poudre de matériau conducteur mélangée dans un ionomère. Un tel procédé de formation de la piste conductrice 21 s'avère particulièrement avantageux pour obtenir une piste conductrice 21 de faible épaisseur.

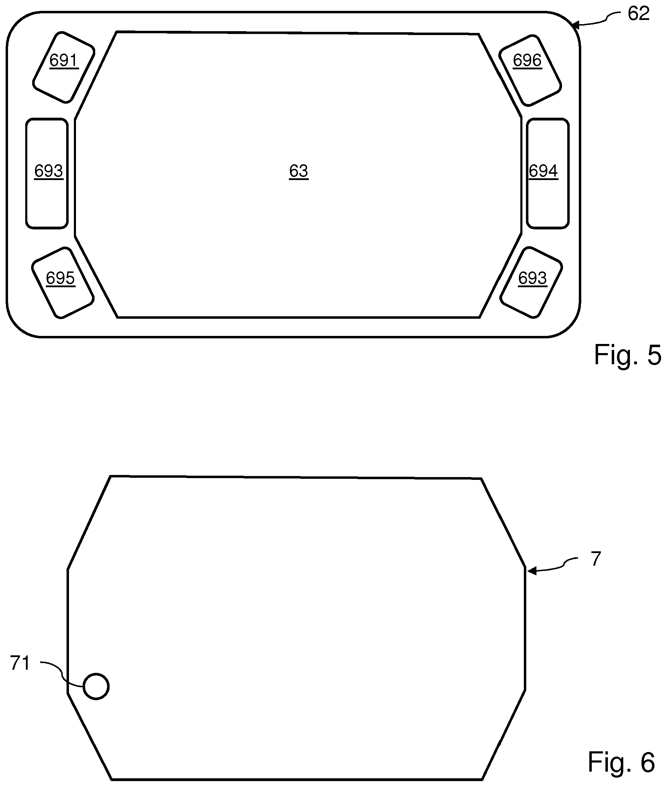

La figure 5 est une vue de dessus d'un deuxième type de renfort 62 pour la cellule de pile à combustible selon le premier mode de réalisation de l'invention. Le renfort 62 présente ici sensiblement la même géométrie et la même structure que le renfort 61. Le renfort 62 diffère du renfort 61 uniquement par l'absence de saillie 64. En pratique, en superposant le renfort 62 sur le renfort 61, la saillie 64 reste découverte par rapport au renfort 62.

La figure 6 est une vue de dessus d'une couche de diffusion gazeuse 7. La couche de diffusion gazeuse 7 est destinée à être plaquée en contact contre l'anode 3. La couche de diffusion gazeuse 7 comporte un orifice 71 (ici un orifice traversant). L'orifice 71 comporte un contour pouvant inclure le contour de l'électrode 22 avec un certain espacement. Ainsi, l'orifice 71 est destiné à venir en regard de l'électrode 22, de sorte que l'électrode 22 ne soit pas en contact avec la couche de diffusion gazeuse 7.

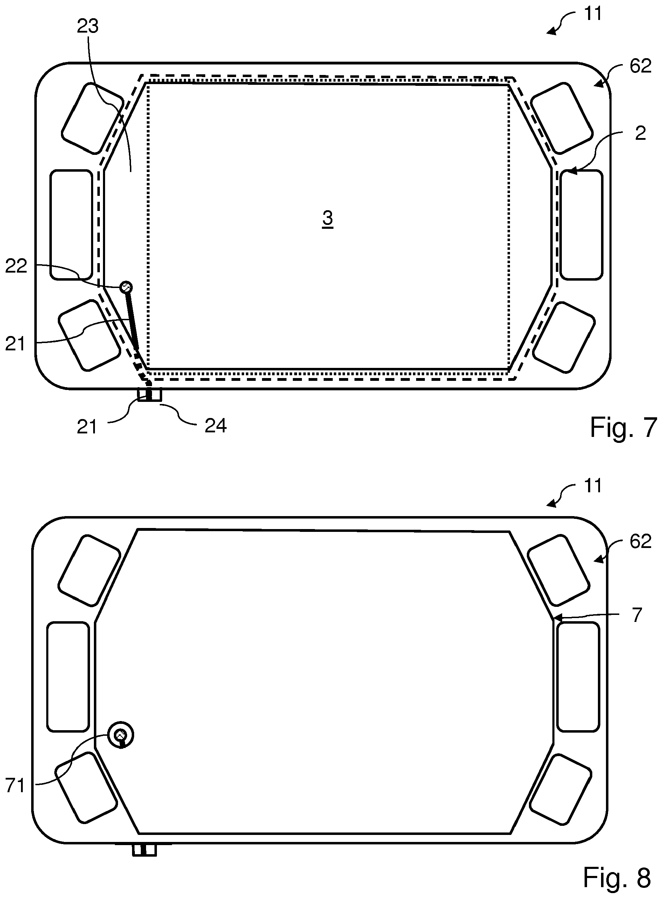

La figure 7 est une vue de dessus d'une cellule électrochimique 11 en cours d'assemblage. Le renfort 61 entoure la cathode et est fixé à la membrane 2. L'ouverture médiane 63 du renfort 61 découvre ainsi la cathode. Une couche de diffusion gazeuse non illustrée peut être positionnée au contact de la cathode, à travers l'ouverture médiane 63 du renfort 61.

Le renfort 62 est superposé au renfort 61. Le renfort 62 entourant l'anode 3 est fixé à la membrane 2. L'ouverture 63 du renfort 62 découvre ainsi l'anode 3. Le contour en trait discontinu correspond à la membrane 2 et le contour en pointillés correspond à l'anode 3. Le renfort 62 est ici également fixé au renfort 61.

L'électrode de mesure 22 est positionnée dans la zone de liaison 23 et ainsi découverte par l'ouverture médiane 63 du renfort 62. La saillie 24 (et la partie de la piste conductrice 21 qu'elle supporte) est en saillie au-delà du renfort 62. La piste conductrice 21 s'étend donc depuis l'ouverture médiane 63 du renfort 62 jusqu'à l'extérieur de ce renfort 62. Une partie de la piste conductrice 21 peut ainsi être connectée à un circuit de traitement externe. Le circuit de traitement externe (non détaillé ici) est configuré pour identifier une pollution d'un écoulement en fonction du potentiel de l'électrode de mesure 22 fourni par la piste conductrice 21. La saillie 64 du renfort 61 se superpose avantageusement à la saillie 24, de façon à supporter cette saillie 24.

La figure 8 est une vue de dessus de la cellule électrochimique 11 à une étape ultérieure de l'assemblage. La couche de diffusion gazeuse 7 de la figure 6 est ici rapportée pour venir en contact contre l'anode 3. L'orifice 71 est ici positionné en regard de l'électrode de mesure 22 de sorte que la couche de diffusion gazeuse 7 et cette électrode de mesure 22 ne sont pas en contact.

On peut également envisager que l'électrode de mesure 22 soit formée après avoir rapporté la couche de diffusion gazeuse 7, par exemple par dépôt d'une encre à travers un orifice traversant 71.

On peut également envisager que l'électrode de mesure 22 soit formée après la solidarisation de la membrane 2 au renfort 62 mais avant de rapporter la couche de diffusion gazeuse 7.

L'intérieur de l'orifice 71 peut constituer une isolation électrique entre l'électrode de mesure 22 et la plaque bipolaire 5 qui la recouvre. Avantageusement, pour garantir l'isolation électrique de l'électrode de mesure 22 par rapport à une couche de diffusion gazeuse 7 ou par rapport à une plaque bipolaire 5, l'électrode de mesure 22 est recouverte par un élément poreux et isolant électriquement (non illustré). L'élément poreux est par exemple formé d'un film polymère microperforé.

Ensuite, l'empilement obtenu à la figure 7, éventuellement complété par d'autres composants, est positionné entre deux plaques bipolaires 5. Les plaques bipolaires 5 viennent notamment comprimer les renforts 61 et 62. Les plaques bipolaires 5 rapportées sont notamment configurées pour qu'au moins un collecteur d'écoulement les traversant soit en communication avec l'anode 3 et la face de la membrane 2 sur laquelle l'anode 3 est fixée. Ce collecteur d'écoulement est ainsi notamment en communication avec la zone de liaison 23. La saillie 24 est par exemple configurée pour rester saillante latéralement par rapport aux plaques bipolaires 5.

La piste conductrice 21 présente avantageusement une épaisseur au plus égale à 10 µm, et de préférence au plus égale à 5 µm, de façon à former une surépaisseur la plus réduite possible au niveau de son passage sous le renfort 62. Une telle piste conductrice 21, et en particulier une piste 21 réalisée sous forme de circuit imprimé, malgré son passage sous le renfort 62, n'altère ni la qualité de l'étanchéité de l'empilement ni l'homogénéité de la pression exercée par les plaques bipolaires 5 sur les renforts 61 et 62.

La piste conductrice 21 est ici isolée électriquement de la plaque bipolaire 5 la surplombant, par l'intermédiaire du renfort 62. L'électrode de mesure 22 est ici isolée électriquement de la plaque bipolaire 5 la surplombant par l'intermédiaire de l'orifice 71 de la couche de diffusion gazeuse.

La plaque bipolaire 5 surplombant l'anode 3 peut comporter une zone incluant des canaux d'homogénéisation. La zone des canaux d'homogénéisation est alors ménagée entre des canaux d'écoulement réactifs surplombant l'anode 3 et un collecteur d'écoulement. La zone des canaux d'homogénéisation est alors avantageusement superposée à la zone de liaison 23 sur laquelle l'électrode de mesure 22 est ménagée.

L'électrode de mesure 22 comprend avantageusement une matrice de ionomère dans laquelle un matériau catalyseur est inclus. L'électrode de mesure 22 comprend avantageusement un matériau catalyseur incluant du platine ou un alliage de platine. Un tel matériau catalyseur s'avère par exemple approprié pour la détection d'une pollution au monoxyde de carbone. Le catalyseur peut avantageusement être fixé sur un support carboné. L'électrode de mesure 22 couvre avantageusement une surface comprise entre 5 et 40 mm² de la zone de liaison 23, de façon à générer un potentiel de mesure le plus fiable possible. L'électrode de mesure 22 peut avantageusement être formée par dépôt d'une encre en contact avec la piste conductrice 21 et la membrane 2.

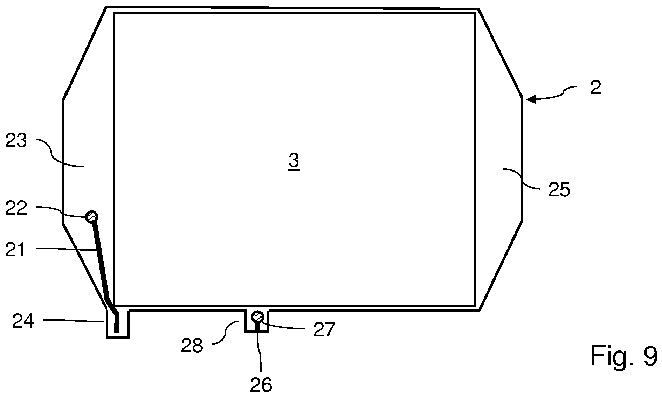

La détermination de la pollution d'un écoulement est avantageusement réalisée par comparaison entre le potentiel de l'électrode de mesure 22 et une électrode de référence. La figure 9 illustre une variante de membrane 2 destinée à favoriser la récupération d'un potentiel de référence. Dans cette variante, la membrane 2 comporte une autre saillie 28, destinée à faire saillie au-delà du renfort 62. Une piste conductrice 26 forme un circuit imprimé sur la saillie 28. Cette piste conductrice 26 est donc positionnée au-delà du renfort 62. Une électrode de référence 27 est formée sur la saillie 28, en contact électrique avec la piste conductrice 26. La pile à combustible peut alors être configurée pour mettre en communication l'électrode 27 avec un fluide de référence, par exemple du dihydrogène pur. L'électrode 27 peut ainsi fournir un potentiel de référence fiable.

Bien que le mode de réalisation détaillé porte sur une électrode de mesure en contact avec un écoulement anodique de dihydrogène, on peut également envisager :
- que l'électrode de mesure est en contact avec un écoulement d'un autre type de carburant ;
- que l'électrode de mesure est en contact avec un écoulement cathodique;
- que l'électrode de mesure est en contact avec un écoulement dans une zone de liaison avec un collecteur de sortie.

Bien que le mode de réalisation détaillée porte sur la détection de monoxyde de carbone dans l'écoulement, des électrodes de mesure à catalyseurs appropriés pourront être utilisées pour la détection d'autres types de polluants.

Bien que le mode de réalisation illustré inclut une couche de diffusion gazeuse 7 munie d'un orifice en regard de l'électrode 22, la pile à combustible peut être dépourvue de couche de diffusion gazeuse entre l'électrode 22 et la plaque bipolaire 5 qui lui est superposée.

Bien que le mode de réalisation illustrée inclut une unique électrode de mesure dans la zone de liaison, on peut également envisager de positionner une autre électrode de mesure (associée à une autre piste conductrice) dans cette zone de liaison. On peut envisager que ces électrodes présentent des compositions différentes. Ces électrodes peuvent ainsi comprendre un même matériau catalyseur en quantités différentes ou des matériaux catalyseurs différents. Une électrode de la zone de liaison peut par exemple être réalisée en platine alors qu'une autre électrode de la zone de liaison est réalisée en PtRu.

On peut également envisager de disposer une électrode de mesure au niveau d'une zone de liaison et une autre électrode de mesure (associée à une autre piste conductrice) au niveau de la zone de liaison positionnée à l'opposée par rapport à la zone active.

## Revendications

1. Pile à combustible (1), **caractérisé en ce qu'**elle comprend :
- un assemblage membrane/électrodes (14) incluant une membrane échangeuse de protons (2), une première électrode formant une anode (3) ou une cathode en contact avec une première face de la membrane, et un premier renfort fixé à la première face de la membrane et entourant ladite première électrode (3) ;
- deux plaques bipolaires (5) entre lesquelles l'assemblage membrane/électrodes (14) est disposé, lesdites plaques bipolaires étant traversées par au moins un collecteur d'écoulement (591, 594) en communication avec ladite première face de la membrane (2) ;
**Caractérisée en ce que** :
- la première face de la membrane (2) comporte une zone active recouverte par ladite première électrode (3) et une zone de liaison (23) non recouverte par ladite première électrode (3) et disposée entre ledit collecteur d'écoulement et la zone active ;
- la pile à combustible (1) comprend en outre :
- une piste conductrice (21) solidarisée à la première face de la membrane (2) et s'étendant entre ladite zone de liaison et un bord de la membrane saillant au-delà dudit premier renfort ;
- une électrode de mesure (22) incluant un matériau catalyseur, positionnée sur la zone de liaison de la première face de la membrane et en contact électrique avec ladite piste conductrice, ladite électrode de mesure étant isolée électriquement par rapport auxdites plaques bipolaires.

2. Pile à combustible (1) selon la revendication 1, dans laquelle ladite piste conductrice (21) présente une épaisseur au plus égale à 10 µm.

3. Pile à combustible (1) selon la revendication 1 ou 2, dans laquelle ladite piste conductrice (21) est un circuit imprimé sur ladite première face de la membrane (2).

4. Pile à combustible (1) selon l'une quelconque des revendications précédentes, dans laquelle ladite électrode de mesure (22) est fixée en contact avec ladite première face de la membrane (2).

5. Pile à combustible (1) selon l'une quelconque des revendications précédentes, dans laquelle ladite électrode de mesure (22) comprend une matrice de ionomère dans laquelle un matériau catalyseur est inclus.

6. Pile à combustible (1) selon l'une quelconque des revendications précédentes, comprenant en outre une couche de diffusion gazeuse (7) en contact avec ladite première électrode (3) et une desdites plaques bipolaires (5), ladite couche de diffusion gazeuse (7) comportant un orifice (71) en regard de ladite électrode de mesure (22) de sorte que la couche de diffusion gazeuse et ladite électrode de mesure (22) ne sont pas en contact.

7. Pile à combustible (1) selon l'une quelconque des revendications précédentes, dans laquelle ladite électrode de mesure (22) est recouverte par un élément poreux et isolant électriquement.

8. Pile à combustible (1) selon l'une quelconque des revendications précédentes, dans laquelle une desdites plaques bipolaires (5) comprend des canaux d'homogénéisation en communication avec ledit collecteur d'écoulement et superposés à ladite zone de liaison (23).

9. Pile à combustible (1) selon l'une quelconque des revendications précédentes, comprenant en outre un deuxième renfort (61) fixé à une deuxième face de la membrane (2), le deuxième renfort comportant une partie (64) se superposant audit bord de la membrane (2) saillant au-delà dudit premier renfort (62).

10. Pile à combustible (1) selon l'une quelconque des revendications précédentes, dans laquelle ledit matériau catalyseur inclut du platine ou un alliage de platine.

11. Pile à combustible (1) selon l'une quelconque des revendications précédentes, dans laquelle ladite électrode de mesure (22) couvre une surface comprise entre 5 et 40 mm² de la zone de liaison.

12. Pile à combustible (1) selon l'une quelconque des revendications précédentes, dans laquelle ladite première électrode est une anode (3).

13. Pile à combustible (1) selon l'une quelconque des revendications précédentes, comprenant en outre une électrode de référence (27) et une deuxième piste conductrice (26) solidarisée à la première face de la membrane, ladite électrode de référence et ladite deuxième piste conductrice étant disposées sur une partie (28) de la membrane saillant au-delà du premier renfort (62), ladite électrode de référence étant disposée au contact d'un fluide de référence.

14. Procédé de fabrication d'une pile à combustible (1), comprenant les étapes de:
- fournir un assemblage membrane/électrodes (14) incluant une membrane échangeuse de protons (2), une première électrode (3) formant une anode ou une cathode en contact avec une première face de la membrane, et un renfort (62) fixé à la première face de la membrane et entourant ladite première électrode, la première face de la membrane comportant une zone active recouverte par ladite première électrode et une zone de liaison (23) non recouverte par ladite première électrode, l'assemblage membrane/électrodes incluant en outre une piste conductrice (21) solidarisée à la première face de la membrane et s'étendant entre ladite zone de liaison (23) et un bord (24) de la membrane saillant au-delà dudit renfort (62), l'assemblage membrane/électrodes incluant en outre une électrode de mesure incluant un matériau catalyseur est positionnée sur la zone de liaison de la première face de la membrane est en contact électrique avec ladite piste conductrice ;
- positionner l'assemblage membrane/électrodes (14) fourni entre deux plaques bipolaires (5) traversées par un collecteur d'écoulement de sorte que ce collecteur d'écoulement soit en communication avec la première face de la membrane (2) et de sorte que ladite électrode de mesure (22) soit isolée électriquement par rapport auxdites plaques bipolaires (5).

15. Procédé de fabrication d'une pile à combustible (1) selon la revendication 14, comprenant une étape préalable de formation et de solidarisation de ladite piste conductrice (21) à la première face de la membrane (2) par dépôt d'une encre incluant un matériau catalyseur sur ladite première face de la membrane.

## Patentansprüche

1. Brennstoffzelle (1), **dadurch gekennzeichnet, dass** sie Folgendes umfasst:
- ein Membran/Elektrodenaufbau (14), der eine Protonenaustauschmembran (2), eine eine Anode (3) oder eine Katode bildende erste Elektrode in Kontakt mit einer ersten Fläche der Membran und eine Verstärkung, die an der ersten Fläche der Membran befestigt ist und die erste Elektrode (3) umgibt, enthält;
- zwei Bipolarplatten (5), zwischen denen der Membran/Elektrodenaufbau (14) angeordnet ist, wobei die Bipolarplatten von wenigstens einem Strömungssammler (591, 594) in Kommunikation mit der ersten Membranfläche (2) durchquert werden;
**dadurch gekennzeichnet, dass**:
- die erste Fläche der Membran (2) eine von der ersten Elektrode (3) bedeckte aktive Zone und eine von der ersten Elektrode (3) nicht bedeckte Verbindungszone (23), die zwischen dem Strömungssammler und der aktiven Zone angeordnet ist, umfasst;
wobei die Brennstoffzelle (1) außerdem Folgendes umfasst:
- eine Leiterbahn (21), die mit der ersten Fläche der Membran (2) fest verbunden ist und sich zwischen der Verbindungszone und einem Rand der Membran, der von der ersten Verstärkung vorsteht, erstreckt;
- eine Messelektrode (22), die ein Katalysatormaterial enthält und auf der Verbindungszone der ersten Fläche der Membran positioniert ist und mit der Leiterbahn in elektrischem Kontakt ist, wobei die Messelektrode von den Bipolarplatten elektrisch isoliert ist.

2. Brennstoffzelle (1) nach Anspruch 1, wobei die Leiterbahn (21) eine Dicke, die höchstens gleich 10 µm beträgt, aufweist.

3. Brennstoffzelle (1) nach Anspruch 1 oder 2, wobei die Leiterbahn (21) eine Schaltung ist, die auf die erste Fläche der Membran (2) gedruckt ist.

4. Brennstoffzelle (1) nach einem der vorhergehenden Ansprüche, wobei die Messelektrode (22) in einem Kontakt mit der ersten Fläche der Membran (2) befestigt ist.

5. Brennstoffzelle (1) nach einem der vorhergehenden Ansprüche, wobei die Messelektrode (22) eine lonomermatrix enthält, in der ein Katalysatormaterial enthalten ist.

6. Brennstoffzelle (1) nach einem der vorhergehenden Ansprüche, die außerdem eine Gasdiffusionsschicht (7) in Kontakt mit der ersten Elektrode (3) und mit einer der Bipolarplatten (5) umfasst, wobei die Gasdiffusionsschicht (7) eine Öffnung (71) gegenüber der Messelektrode (22) aufweist, derart, dass die Gasdiffusionsschicht und die Messelektrode (22) nicht in Kontakt sind.

7. Brennstoffzelle (1) nach einem der vorhergehenden Ansprüche, wobei die Messelektrode (22) von einem porösen und elektrisch isolierenden Element bedeckt ist.

8. Brennstoffzelle (1) nach einem der vorhergehenden Ansprüche, wobei eine der Bipolarplatten (5) Homogenisierungskanäle enthält, die mit dem Strömungssammler in Kommunikation stehen und der Verbindungszone (23) überlagert sind.

9. Brennstoffzelle (1) nach einem der vorhergehenden Ansprüche, die außerdem eine zweite Verstärkung (61) umfasst, die an einer zweiten Fläche der Membran (2) befestigt ist, wobei die zweite Verstärkung einen Teil (64) aufweist, der dem Rand der Membran (2), der über die erste Verstärkung (62) vorsteht, überlagert ist.

10. Brennstoffzelle (1) nach einem der vorhergehenden Ansprüche, wobei das Katalysatormaterial Platin oder eine Platinlegierung enthält.

11. Brennstoffzelle (1) nach einem der vorhergehenden Ansprüche, wobei die Messelektrode (22) eine Oberfläche im Bereich von 5 bis 40 mm² der Verbindungszone abdeckt.

12. Brennstoffzelle (1) nach einem der vorhergehenden Ansprüche, wobei die erste Elektrode eine Anode (3) ist.

13. Brennstoffzelle (1) nach einem der vorhergehenden Ansprüche, die außerdem eine Referenzelektrode (27) und eine zweite Leiterbahn (26), die mit der ersten Fläche der Membran fest verbunden ist, umfasst, wobei die Referenzelektrode und die zweite Leiterbahn auf einem Teil (28) der Membran, der über die erste Verstärkung (62) vorsteht, angeordnet sind, wobei die Referenzelektrode in Kontakt mit einem Referenzfluid angeordnet ist.

14. Verfahren zum Herstellen einer Brennstoffzelle (1), das die folgenden Schritte umfasst:
- Bereitstellen eines Membran/Elektrodenaufbaus (14), der eine Protonenaustauschmembran (2), eine eine Anode oder eine Katode bildende erste Elektrode (3) in Kontakt mit einer ersten Fläche der Membran sowie eine Verstärkung (62), die an der ersten Fläche der Membran befestigt ist und die erste Elektrode umgibt, enthält, wobei die erste Fläche der Membran eine von der ersten Elektrode bedeckte aktive Zone und eine von der ersten Elektrode nicht bedeckte Verbindungszone (23) aufweist, wobei der Membran/Elektrodenaufbau außerdem eine Leiterbahn (21) aufweist, die mit der ersten Fläche der Membran fest verbunden ist und sich zwischen der Verbindungszone (23) und einem Rand (24) der Membran, der über die Verstärkung (62) vorsteht, erstreckt, wobei der Membran/Elektrodenaufbau außerdem eine Messelektrode umfasst, die ein Katalysatormaterial enthält und auf der Verbindungszone der ersten Fläche der Membran in elektrischem Kontakt mit der Leiterbahn positioniert ist;
- Positionieren des bereitgestellten Membran/Elektrodenaufbaus (14) zwischen zwei Bipolarplatten (5), die von einem Strömungssammler durchquert werden, derart, dass dieser Strömungssammler mit der ersten Fläche der Membran (2) in Kommunikation steht, und derart, dass die Messelektrode (22) von den Bipolarplatten (5) elektrisch isoliert ist.

15. Verfahren zum Herstellen einer Brennstoffzelle (1) nach Anspruch 14, das einen vorhergehenden Schritt des Bildens und Befestigens der Leiterbahn (21) an der ersten Fläche der Membran (2) durch Abscheidung einer ein Katalysatormaterial enthaltenden Tinte auf der ersten Fläche der Membran umfasst.

## Claims

1. Fuel cell stack (1), **characterized in that** it comprises:
- a membrane/electrode assembly (14) including a proton exchange membrane (2), a first electrode forming an anode (3) or a cathode making contact with a first face of the membrane, and a first reinforcement fixed to the first face of the membrane and surrounding said first electrode (3);
- two bipolar plates (5) between which the membrane/electrode assembly (14) is positioned, at least one flow manifold (591, 594) passing through said bipolar plates and in communication with said first face of the membrane (2);
**characterized in that**:
- the first face of the membrane (2) comprises an active zone, which is covered by said first electrode (3), and a connection zone (23), which is not covered by said electrode (3) and is positioned between said flow manifold and the active zone;
- the fuel cell stack (1) additionally comprises:
- a conductive track (21) secured to the first face of the membrane (2) and extending between said connection zone and an edge of the membrane protruding beyond said first reinforcement;
- a measurement electrode (22) including a catalytic material, positioned on the connection zone of the first face of the membrane and making electrical contact with said conductive track, said measurement electrode being electrically isolated with respect to said bipolar plates.

2. Fuel cell stack (1) according to Claim 1, in which the thickness of said conductive track (21) is at most equal to 10 µm.

3. Fuel cell stack (1) according to Claim 1 or 2, in which said conductive track (21) is a circuit printed on said first face of the membrane (2).

4. Fuel cell stack (1) according to any one of the preceding claims, in which said measurement electrode (22) is fixed in contact with said first face of the membrane (2).

5. Fuel cell stack (1) according to any one of the preceding claims, in which said measurement electrode (22) comprises an ionomer matrix in which a catalytic material is included.

6. Fuel cell stack (1) according to any one of the preceding claims, additionally comprising a gas diffusion layer (7) making contact with said first electrode (3) and one of said bipolar plates (5), said gas diffusion layer (7) comprising an aperture (71) facing said measurement electrode (22) such that the gas diffusion layer and said measurement electrode (22) do not make contact.

7. Fuel cell stack (1) according to any one of the preceding claims, in which said measurement electrode (22) is covered by a porous, electrically insulating element.

8. The fuel cell stack (1) according to any one of the preceding claims, in which one of said bipolar plates (5) comprises homogenization channels in communication with said flow manifold and superposed onto said connection zone (23).

9. Fuel cell stack (1) according to any one of the preceding claims, additionally comprising a second reinforcement (61) fixed to a second face of the membrane (2), the second reinforcement comprising a portion (64) being superposed onto said edge of the membrane (2) protruding beyond said first reinforcement (62).

10. Fuel cell stack (1) according to any one of the preceding claims, in which said catalytic material includes platinum or a platinum alloy.

11. Fuel cell stack (1) according to any one of the preceding claims, in which said measurement electrode (22) covers an area of between 5 and 40 mm² of the connection zone.

12. Fuel cell stack (1) according to any one of the preceding claims, in which said first electrode is an anode (3).

13. Fuel cell stack (1) according to any one of the preceding claims, additionally comprising a reference electrode (27) and a second conductive track (26) which is secured to the first face of the membrane, said reference electrode and said second conductive track being positioned on a portion (28) of the membrane protruding beyond the first reinforcement (62), said reference electrode being positioned in contact with a reference fluid.

14. Method for manufacturing a fuel cell stack (1), comprising the steps of:
- producing a membrane/electrode assembly (14) including a proton exchange membrane (2), a first electrode forming an anode (3) or a cathode making contact with a first face of the membrane, and a reinforcement (62) fixed to the first face of the membrane and surrounding said first electrode, the first face of the membrane comprising an active zone, which is covered by said first electrode, and a connection zone (23), which is not covered by said first electrode, the membrane/electrode assembly additionally comprising a conductive track (21) secured to the first face of the membrane and extending between said connection zone (23) and an edge (24) of the membrane protruding beyond said reinforcement (62), the membrane/electrode assembly additionally including a measurement electrode including a catalytic material, positioned on the connection zone of the first face of the membrane and making electrical contact with said conductive track;
- positioning the produced membrane/electrode assembly (14) between two bipolar plates (5), a flow manifold passing through said bipolar plates such that this flow manifold is in communication with the first face of the membrane (2) and such that said measurement electrode (22) is electrically isolated with respect to said bipolar plates (5).

15. Method for manufacturing a fuel cell stack (1) according to Claim 14, comprising a prior step of forming said conductive track (21) and securing it to the first face of the membrane (2) by depositing an ink including a catalytic material on said first face of the membrane.
